# EUROPÄISCHE PATENTSCHRIFT

(11) **EP 2 697 539 B1**
(45) Veröffentlichungstag und Bekanntmachung des Hinweises auf die Patenterteilung: **15.08.2018**
(21) Anmeldenummer: 12707544.8
(22) Anmeldetag: 02.03.2012
(51) Int. Cl.: F16H 61/00

(54) **VERFAHREN ZUM STEUERN EINES AUTOMATISIERTEN SCHALTGETRIEBES**
METHOD FOR CONTROLLING AN AUTOMATED TRANSMISSION
PROCÉDÉ DE COMMANDE D'UNE BOÎTE DE VITESSES AUTOMATISÉE

(30) Priorität: 11.04.2011 DE 102011007105
(43) Veröffentlichungstag der Anmeldung: 19.02.2014
(73) Patentinhaber: ZF Friedrichshafen AG, 88046 Friedrichshafen (DE)
(72) Erfinder: STEINBORN, Mario, 88046 Friedrichshafen (DE); BREUER, Jochen, 88069 Tettnang (DE); RÜCHARDT, Christoph, 88131 Bodolz (DE); JÄGER, Thomas, 88074 Meckenbeuren (DE); MAIR, Roland, 88069 Tettnang (DE); MORO-OLIVEROS, Melchor, 88074 Meckenbeuren (DE)
(86) Internationale Anmeldenummer: PCT/EP2012/053594
(87) Internationale Veröffentlichungsnummer: WO 2012/139814

(56) Entgegenhaltungen:
- EP-A2- 1 055 847
- DE-T2- 69 625 937
- GB-A- 2 354 295
- GB-A- 2 369 657

## Beschreibung

Die Erfindung betrifft ein Verfahren zum Steuern eines automatisierten Schaltgetriebes gemäß dem Oberbegriff des Patentanspruchs 1 bzw. 3.

Automatisierte Schaltgetriebe werden seit geraumer Zeit in unterschiedlichen Kraftfahrzeugtypen genutzt. Insbesondere bei Nutzfahrzeugen werden beispielsweise als Mehrgruppengetriebe ausgelegte Schaltgetriebe eingesetzt, bei denen Mittel zur Kraftunterstützung für die Schaltelemente bei Gangwechseln vorgesehen sind. Mehrgruppengetriebe bestehen aus zwei oder mehr meist seriell angeordneten Getriebegruppen, durch deren Kombination eine große Gangzahl realisierbar ist. Sie umfassen beispielsweise ein Splittergetriebe als Eingangs- oder Vorschaltgetriebe, ein Hauptgetriebe und ein diesem nachgeordnetes Bereichsgetriebe als Ausgangs- oder Nachschaltgetriebe. Derartige Schaltgetriebe bieten eine besonders feine Gangabstufung mit beispielsweise zwölf oder sechzehn Gängen. Sie zeichnen sich im Vergleich zu manuellen Schaltgetrieben durch einen hohen Bedienungskomfort aus und sind im Vergleich zu automatischen Getrieben besonders wirtschaftlich in den Herstellungs- und Betriebskosten.

Derartige Schaltgetriebe verwenden zur Durchführung von Schaltvorgängen zumindest teilweise den Vorratsdruck eines Fahrzeugs, in welchem sie eingebaut sind. Die Schaltelemente, d.h. die Hauptabschaltventile und die diesen nachgeordneten Schaltventile werden entweder direkt mit diesem Vorratsdruck bzw. Systemdruck oder mit einem beispielsweise mittels Druckminderventilen abgesenkten konstanten Betriebsdruck versorgt. Das bedeutet, dass die Belastung der Schaltelemente, die Schaltzeiten, die Schaltgeräusche usw. nicht oder nur in geringem Maße beeinflusst werden können.

Aus der DE 10 2006 040 476 A1 ist zwar bereits eine hydraulische oder pneumatische Steuerungseinrichtung für ein automatisiertes Schaltgetriebe bekannt, bei welchem der Druck in einem dem Hauptabschaltventil bzw. den Hauptabschaltventilen vorgeordneten, als Druckspeicher ausgelegten Getriebestellerraum regelbar ist. Dabei wird der veränderliche Druckmittelbedarf vor einem Schaltvorgang abgeschätzt, oder es wird ein Druckabfall im System mittels eines Drucksensors ermittelt, und in Abhängigkeit von dem Druckmittelbedarf werden ein, zwei oder mehr parallel angeordnete Hauptabschaltventile geöffnet, um diesen Druckmittelbedarf zu decken. Dieses Verfahren ist jedoch ungenau, sofern der Druckmittelbedarf geschätzt wird, oder die Regelung der Hauptabschaltventile erfolgt zu spät, da diese beispielsweise erst nach einem erfolgten, vom Drucksensor erfassten Druckabfall im System einsetzen kann. Insbesondere erlaubt das bekannte Verfahren keine variable Anpassung des Versorgungsdrucks an die jeweiligen speziellen Anforderungen eines bestimmten Schaltszenarios.

Die EP 1 055 847 A2 offenbart eine Schalteinrichtung für Getriebe umfassend ein Stellglied zum Bewegen einzelner Schaltmuffen und ein Steuermittel zum Steuern des Stellglieds auf der Basis eines Gangwechselbefehls. Das Steuermittel steuert einen Betriebsdruck des Stellglieds derart, dass während einer Synchronisierungsperiode eine auf die zu betätigende Schaltmuffe wirkende Antriebskraft variiert.

Aus der DE 696 25 937 T2 ist ein Gangauswahlmechanismus bekannt, bei welchem der Betriebsdruck von Betätigungsmitteln durch Stellglied geregelte Ventilmittel während der Auswahl eines Getriebeganges oder in Abhängigkeit von einem Gang, der im Getriebe ausgewählt ist, verändert wird.

Vor diesem Hintergrund liegt der Erfindung die Aufgabe zugrunde, ein Verfahren zum Steuern eines automatisierten Schaltgetriebes zu schaffen, welches einen an ein jeweils bestimmtes Schaltszenario optimal angepassten Druck bzw. Druckverlauf ermöglicht.

Die Lösung dieser Aufgabe ergibt sich aus den Merkmalen der Hauptansprüche, während vorteilhafte Ausgestaltungen und Weiterbildungen der Erfindung den Unteransprüchen entnehmbar sind.

Der Erfindung liegt die Erkenntnis zugrunde, dass der Solldruck bzw. der Solldruckverlauf für alle oder zumindest alle wesentlichen denkbaren Schaltszenarien bestimmt werden kann, so dass schon bei Einleitung eines Schaltbefehls über geeignete Druckregelmechanismen dieser Solldruck bzw. Solldruckverlauf bekannt ist und entsprechend gesteuert oder geregelt werden kann.

Demnach geht die Erfindung aus von einem Verfahren zum Steuern eines automatisierten Schaltgetriebes, mit einem oder mehreren über zugeordnete Schaltventile druckmittelbetätigten Stellzylindern, wenigstens einem den Schaltventilen vorgeordneten Hauptabschaltventil, und mit einem Steuergerät zur Steuerung der Schalt- und Hauptabschaltventile, wobei Druckmittelanforderungen für durchzuführende Schaltvorgänge ermittelt und die jeweiligen Hauptabschaltventile in Abhängigkeit davon angesteuert werden.

Zur Lösung der gestellten Aufgabe ist dabei gemäß einer ersten Variante vorgesehen, dass der Solldruck bzw. Solldruckverlauf an den Schaltventilen für unterschiedliche Schaltszenarien des Schaltgetriebes unter Berücksichtigung mehrerer der nachfolgend aufgeführten Kriterien bestimmt wird:
a) die hinsichtlich einer einzustellenden Synchrondrehzahl zu synchronisierende Masse;
b) ein über den Synchronisierverlauf gewünschter variabler Solldruck;
c) das Bestehen einer Zahn-auf-Zahn-Stellung zweier Zahnräder;
d) die Schaltung von einer Gangstufe nach Neutral;
e) die jeweilige Kolbenposition im Stellzylinder;
f) die gewünschte Kolbengeschwindigkeit im Stellzylinder;
g) die gewünschte Kolbenbeschleunigung im Stellzylinder;
h) die jeweils zu schaltende Gangstufe;
i) das Erfordernis von Ersatzfunktionen bei Problemen mit Sollfunktionen;
und dass die jeweiligen Hauptabschaltventile entsprechend dem so bestimmten Solldruck bzw. Solldruckverlauf angesteuert werden.

Es sei hier angemerkt, dass weitere Schaltszenarien möglich sind, für die entsprechende Solldrücke bzw. Solldruckverläufe bestimmt werden können, wie nicht im einzelnen ausgeführt zu werden braucht.

Zu den oben aufgeführten Kriterien sei folgendes bemerkt: Der Solldruck ist umso höher, je größer die zu synchronisierende Masse ist. Beim Synchronisierverlauf soll beispielsweise zu Beginn ein niedriger Solldruck gegeben sein, im weiteren Verlauf soll sich der Solldruck erhöhen und gegen Ende des Synchronisierverlaufes soll der Solldruck wieder abgesenkt werden, um eine geringe Belastung der Schaltelemente sicherzustellen. Um eine Zahn-auf-Zahn-Stellung komfortabel aufzulösen ist der Solldruck abzusenken, um eine Zahn-auf-Zahn-Stellung schnell aufzulösen ist der Solldruck zu erhöhen. Beim Schalten aus einer Gangstufe nach Neutral wird der Solldruck abhängig vom noch anliegendem Antriebsstrangmoment und/oder dessen Gradient beim Gangausschalten variiert. Für das Synchronisieren sowie Schalten und die dementsprechende Kolbenposition im Schaltzylinder einerseits bzw. für das bloße Schalten und die entsprechende Kolbenposition im Schaltzylinder andererseits sind unterschiedliche Solldrücke erforderlich. Um eine vorgegebene Kolbengeschwindigkeit im Schaltzylinder einzuhalten, wird der Solldruck über den Schaltverlauf verändert. Um eine vorgegebene Kolbenbeschleunigung im Schaltzylinder zu erreichen, wird der Solldruck über den Schaltverlauf verändert. Unterschiedliche Gangstufen erfordern unterschiedliche Solldrücke. Bei Problemen mit den genannten Sollfunktionen, beispielsweise bei Ausschaltproblemen, Synchronisierproblemen oder Einschaltproblemen werden Ersatzfunktionen vorgesehen.

Gemäß der ersten Variante der Erfindung ist vorgesehen, dass die aufgeführten Kriterien gegeneinander gewichtet und entsprechend vorgegebenen Prioritäten dem jeweiligen Schaltvorgang zugrunde gelegt werden. Wenn demnach bei einem bestimmten Schaltvorgang mehrere der oben genannten Kriterien vorliegen, dann werden die vorgegebenen Prioritäten berücksichtigt.

Gemäß einer Ausgestaltung der ersten Variante der Erfindung können den aufgeführten Kriterien entsprechende Solldrücke bzw. Solldruckverläufe zu einem resultierenden Gesamtsolldruck überlagert werden.

Zur Lösung der gestellten Aufgabe ist gemäß einer zweiten Variante vorgesehen, dass der Solldruck bzw. Solldruckverlauf an den Schaltventilen für unterschiedliche Schaltszenarien des Schaltgetriebes unter Berücksichtigung zumindest eines oder mehrerer der nachfolgend aufgeführten Kriterien bestimmt wird:
a) die hinsichtlich einer einzustellenden Synchrondrehzahl zu synchronisierende Masse;
c) das Bestehen einer Zahn-auf-Zahn-Stellung zweier Zahnräder;
i) das Erfordernis von Ersatzfunktionen bei Problemen mit Sollfunktionen;
und dass die jeweiligen Hauptabschaltventile (4) entsprechend dem so bestimmten Solldruckverlauf angesteuert werden.

Gemäß einer Ausgestaltung der zweiten Variante der Erfindung ist vorgesehen, dass die aufgeführten Kriterien gegeneinander gewichtet und entsprechend vorgegebenen Prioritäten dem Schaltvorgang zugrunde gelegt werden. Wenn demnach bei einem bestimmten Schaltvorgang mehrere der oben genannten Kriterien vorliegen, dann werden die vorgegebenen Prioritäten berücksichtigt.

Gemäß einer weiteren Ausgestaltung der zweiten Variante der Erfindung können den aufgeführten Kriterien entsprechende Solldrücke bzw. Solldruckverläufe zu einem resultierenden Gesamtsolldruck überlagert werden.

Zur weiteren Erläuterung der Erfindung ist der Beschreibung eine Zeichnung beigefügt. Diese zeigt schematisch ein Schaltschema zur Durchführung des erfindungsgemäßen Steuerungsverfahrens.

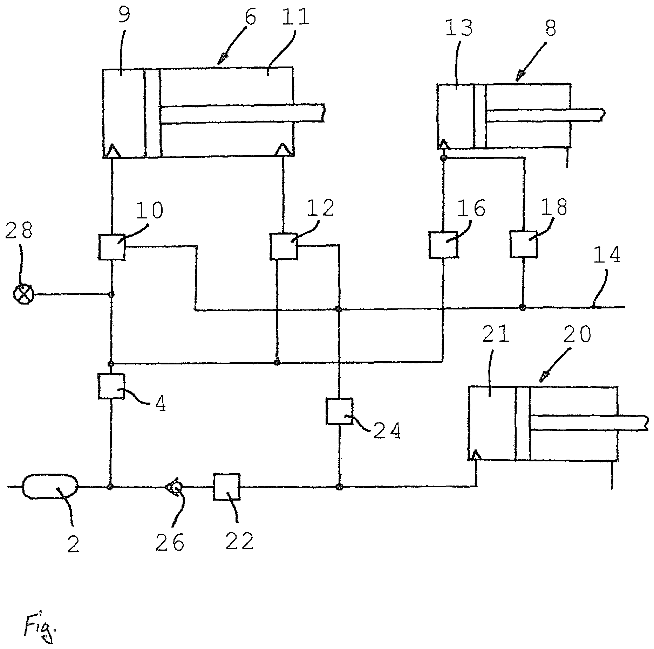

Das in der einzigen Figur dargestellte Schaltsystem, beispielsweise ein pneumatisches Schaltsystem zum Schalten eines automatisierten Schaltgetriebes für Nutzfahrzeuge, wird von einem fahrzeugseitigen Druckmittelversorgungssystem, welches einen Druckmittelvorratsbehälter 2 umfasst, mit Druckmittel versorgt.

Das Schaltsystem umfasst im vorliegenden Fall beispielhaft ein dem Druckmittelvorratsbehälter 2 nachgeordnetes Hauptabschaltventil 4, welches die diesem nachgeordnete Schaltungsanordnung mit dem Druckmittelvorratsbehälter 2 verbinden oder von diesem trennen kann. Es sei hier bemerkt, dass anstelle des Hauptabschaltventils 4 auch mehrere parallel angeordnete Hauptabschaltventile vorgesehen sein können.

Die nachgeordnete Schaltungsanordnung umfasst im dargestellten Fall unter anderem zwei Stellzylinder 6 und 8, wobei der erste Stellzylinder 6 ein doppelt wirkender Stellzylinder beispielsweise zum Wählen einer Gangstufe oder einer Schaltgasse und der zweite Stellzylinder 8 ein einseitig wirkender Stellzylinder für eine Getriebebremse ist.

Die beiden Druckkammern 9 bzw. 11 des ersten Stellzylinders 6 werden jeweils mittels eines zugeordneten 3/2-Wegeventils 10 bzw. 12 befüllt oder über eine Druckmittelabführleitung 14 entlüftet, während der einzige Druckraum 13 des zweiten Stellzylinders 8 mittels eines 2/2-Wegeventils 16 befüllt und mittels eines 2/2-Wegeventils 18 über die Druckmittelabführleitung 14 entlüftet wird. Die Wegeventile 10 und 12 werden auch als Schaltventile, die Wegeventile 16 und 18 als Belüftungs- bzw. Entlüftungsventile bezeichnet.

Das Schaltsystem umfasst hier weiter einen dritten, einseitig wirkenden Stellzylinder 20, welcher zur Betätigung einer Getriebekupplung dient. Der einzige Druckraum 21 des dritten Stellzylinders 20 wird über ein 2/2-Wegeventil 22 befüllt und über ein 2/2-Wegeventil 24 über die Druckmittelabführleitung 14 entlüftet. Dem Wegeventil 22 zum Befüllen des Kupplungs-Stellzylinders 20 ist ein Rückschlagventil 26 vorgeordnet, um ein Entlüften des Kupplungs-Stellzylinders 20 bei einem Abfall der Druckversorgung zu verhindern.

Die den Stellzylindern zugeordneten Wegeventile 10, 12, 16, 18, 22, 24 und insbesondere das Hauptabschaltventil 4 werden über ein Steuergerät, welches aus Gründen einer besseren Übersichtlichkeit nicht dargestellt ist, so angesteuert, dass die vorne beschriebene Aufgabe gelöst wird, d.h. dass der Versorgungsdruck im System während einer Getriebeschaltung entsprechend den aufgeführten Kriterien variabel angepasst wird. Ein Drucksensor 28 erfasst den Solldruck in der dem Hauptabschaltventil 4 nachgeordneten Schaltungsanordnung und führt ein entsprechendes Signal dem Steuergerät zu.

### Bezugszeichen

- 2: Druckmittelvorratsbehälter
- 4: Hauptabschaltventil
- 6: Stellzylinder
- 8: Stellzylinder
- 9: Druckkammer
- 10: 3/2-Wegeventil
- 11: Druckkammer
- 12: 3/2-Wegeventil
- 13: Druckkammer
- 14: Druckmittelabführleitung
- 16: 2/2-Wegeventil
- 18: 2/2-Wegeventil
- 20: Stellzylinder
- 21: Druckkammer
- 22: 2/2-Wegeventil
- 24: 2/2-Wegeventil
- 26: Rückschlagventil

## Patentansprüche

1. Verfahren zum Steuern eines automatisierten Schaltgetriebes für Kraftfahrzeuge mit einem oder mehreren über zugeordnete Schaltventile (10, 12) druckmittelbetätigten Stellzylindern (6, 8, 20), wenigstens einem den Schaltventilen vorgeordneten Hauptabschaltventil (4), und mit einem Steuergerät zur Steuerung der Schalt- und Hauptabschaltventile, wobei Druckmittelanforderungen für durchzuführende Schaltvorgänge ermittelt und die jeweiligen Hauptabschaltventile in Abhängigkeit davon angesteuert werden, **dadurch gekennzeichnet, dass** der Solldruck bzw. Solldruckverlauf an den Schaltventilen (10, 12) für unterschiedliche Schaltszenarien des Schaltgetriebes unter Berücksichtigung mehrerer der nachfolgend aufgeführten Kriterien bestimmt wird:
a) die hinsichtlich einer einzustellenden Synchrondrehzahl zu synchronisierende Masse;
b) ein über den Synchronisierverlauf gewünschter variabler Solldruck;
c) das Bestehen einer Zahn-auf-Zahn-Stellung zweier Zahnräder;
d) die Schaltung von einer Gangstufe nach Neutral;
e) die jeweilige Kolbenposition im Stellzylinder;
f) die gewünschte Kolbengeschwindigkeit im Stellzylinder;
g) die gewünschte Kolbenbeschleunigung im Stellzylinder;
h) die jeweils zu schaltende Gangstufe;
i) das Erfordernis von Ersatzfunktionen bei Problemen mit Sollfunktionen;
und dass die jeweiligen Hauptabschaltventile (4) entsprechend dem so bestimmten Solldruckverlauf angesteuert werden, wobei die aufgeführten Kriterien gegeneinander gewichtet und entsprechend vorgegebenen Prioritäten dem Schaltvorgang zugrunde gelegt werden.

2. Verfahren nach Anspruch 1, **dadurch gekennzeichnet, dass** den aufgeführten Kriterien entsprechende Solldrücke bzw. Solldruckverläufe zu einem resultierenden Gesamtsolldruck überlagert werden.

3. Verfahren zum Steuern eines automatisierten Schaltgetriebes für Kraftfahrzeuge mit einem oder mehreren über zugeordnete Schaltventile (10, 12) druckmittelbetätigten Stellzylindern (6, 8, 20), wenigstens einem den Schaltventilen vorgeordneten Hauptabschaltventil (4), und mit einem Steuergerät zur Steuerung der Schalt- und Hauptabschaltventile, wobei Druckmittelanforderungen für durchzuführende Schaltvorgänge ermittelt und die jeweiligen Hauptabschaltventile in Abhängigkeit davon angesteuert werden, **dadurch gekennzeichnet, dass** der Solldruck bzw. Solldruckverlauf an den Schaltventilen (10, 12) für unterschiedliche Schaltszenarien des Schaltgetriebes unter Berücksichtigung zumindest eines oder mehrerer der nachfolgend aufgeführten Kriterien bestimmt wird:
a) die hinsichtlich einer einzustellenden Synchrondrehzahl zu synchronisierende Masse;
c) das Bestehen einer Zahn-auf-Zahn-Stellung zweier Zahnräder;
i) das Erfordernis von Ersatzfunktionen bei Problemen mit Sollfunktionen;
und dass die jeweiligen Hauptabschaltventile (4) entsprechend dem so bestimmten Solldruckverlauf angesteuert werden.

4. Verfahren nach Anspruch 3, **dadurch gekennzeichnet, dass** die aufgeführten Kriterien gegeneinander gewichtet und entsprechend vorgegebenen Prioritäten dem Schaltvorgang zugrunde gelegt werden.

5. Verfahren nach Anspruch 3 oder 4, **dadurch gekennzeichnet, dass** den aufgeführten Kriterien entsprechende Solldrücke bzw. Solldruckverläufe zu einem resultierenden Gesamtsolldruck überlagert werden.

## Claims

1. Method for controlling an automated transmission for motor vehicles having one or more actuating cylinders (6, 8, 20) which can be actuated by pressure medium via associated shift valves (10, 12), at least one main shut-off valve (4) which is arranged upstream of the shift valves, and having a control unit for controlling the shift valves and main shut-off valves, pressure medium requirements for shift operations to be carried out being determined, and the respective main shut-off valves being actuated in a manner which is dependent thereon, **characterized in that** the setpoint pressure or setpoint pressure gradient at the shift valves (10, 12) is determined for different shift scenarios of the transmission with consideration of a plurality of the criteria listed in the following text:
a) the mass to be synchronized with regard to a synchronizer speed which is to be set;
b) a variable setpoint pressure which is desired over the synchronizing course;
c) the existence of a tooth-on-tooth position of two gearwheels;
d) the shift from a gear stage into neutral;
e) the respective piston position in the actuating cylinder;
f) the desired piston speed in the actuating cylinder;
g) the desired piston acceleration in the actuating cylinder;
h) the respective gear stage to be shifted;
i) the requirement of replacement functions in the case of problems with setpoint functions;
and **in that** the respective main shut-off valves (4) are actuated in accordance with the setpoint pressure gradient which is determined in this way, the listed criteria being weighted with respect to one another and the shift operation being based on correspondingly predefined priorities.

2. Method according to Claim 1, **characterized in that** setpoint pressures or setpoint pressure gradients which correspond to the listed criteria are superimposed to form a resulting overall setpoint pressure.

3. Method for controlling an automated transmission for motor vehicles having one or more actuating cylinders (6, 8, 20) which can be actuated by pressure medium via associated shift valves (10, 12), at least one main shut-off valve (4) which is arranged upstream of the shift valves, and having a control unit for controlling the shift valves and main shut-off valves, pressure medium requirements for shift operations to be carried out being determined, and the respective main shut-off valves being actuated in a manner which is dependent thereon, **characterized in that** the setpoint pressure or setpoint pressure gradient at the shift valves (10, 12) is determined for different shift scenarios of the transmission with consideration of at least one or a plurality of the criteria listed in the following text:
a) the mass to be synchronized with regard to a synchronizer speed which is to be set;
c) the existence of a tooth-on-tooth position of two gearwheels;
i) the requirement of replacement functions in the case of problems with setpoint functions;
and **in that** the respective main shut-off valves (4) are actuated in accordance with the setpoint pressure gradient which is determined in this way.

4. Method according to Claim 3, **characterized in that** the listed criteria are weighted with respect to one another and the shift operation is based on correspondingly predefined priorities.

5. Method according to Claim 3 or 4, **characterized in that** setpoint pressures or setpoint pressure gradients which correspond to the listed criteria are superimposed to form a resulting overall setpoint pressure.

## Revendications

1. Procédé de commande d'une boîte de vitesses automatisée pour des véhicules automobiles avec un ou plusieurs cylindres de commande (6, 8, 20) actionnés par un fluide sous pression au moyen de soupapes de commutation associées (10, 12), avec au moins une soupape de coupure principale (4) montée en amont des soupapes de commutation, et avec un appareil de commande pour commander les soupapes de commutation et les soupapes de coupure principales, dans lequel on détermine des demandes de fluide sous pression pour des opérations de changement de vitesse à effectuer et on commande les soupapes de coupure principales respectives en fonction de celles-ci, **caractérisé en ce que** l'on détermine la pression de consigne ou la courbe de pression de consigne aux soupapes de commutation (10, 12) pour différents scenarii de changement de vitesse de la boîte de vitesses en tenant compte de plusieurs des critères présentés ci-dessous:
a) la masse à synchroniser concernant un nombre de tours de synchronisation à régler;
b) une pression de consigne variable désirée par l'allure de synchronisation;
c) l'existence d'une position dent contre dent de deux roues dentées;
d) le passage d'un rapport de vitesse au point mort;
e) la position respective du piston dans le cylindre de commande;
f) la vitesse désirée du piston dans le cylindre de commande;
g) l'accélération désirée du piston dans le cylindre de commande;
h) le rapport de vitesse respectif à engager;
i) le besoin de fonctions de remplacement en cas de problèmes avec les fonctions de consigne;
et **en ce que** l'on commande les soupapes de coupure principales respectives (4) selon la courbe de la pression de consigne ainsi déterminée, dans lequel on pondère les différents critères présentés l'un par rapport à l'autre et on se base sur eux pour l'opération de changement de vitesse suivant des priorités prédéterminées.

2. Procédé selon la revendication 1, **caractérisé en ce que** l'on superpose aux critères présentés des pressions de consigne ou des courbes de pression de consigne correspondantes pour une pression de consigne totale résultante.

3. Procédé de commande d'une boîte de vitesses automatisée pour des véhicules automobiles avec un ou plusieurs cylindres de commande (6, 8, 20) actionnés par un fluide sous pression au moyen de soupapes de commutation associées (10, 12), avec au moins une soupape de coupure principale (4) montée en amont des soupapes de commutation, et avec un appareil de commande pour commander les soupapes de commutation et les soupapes de coupure principales, dans lequel on détermine des demandes de fluide sous pression pour des opérations de changement de vitesse à effectuer et on commande les soupapes de coupure principales respectives en fonction de celles-ci, **caractérisé en ce que** l'on détermine la pression de consigne ou la courbe de pression de consigne aux soupapes de commutation (10, 12) pour différents scenarii de changement de vitesse de la boîte de vitesses en tenant compte d'au moins un ou de plusieurs des critères présentés ci-dessous:
a) la masse à synchroniser concernant un nombre de tours de synchronisation à régler;
c) l'existence d'une position dent contre dent de deux roues dentées;
i) le besoin de fonctions de remplacement en cas de problèmes avec les fonctions de consigne;
et **en ce que** l'on commande les soupapes de coupure principales respectives (4) selon la courbe de la pression de consigne ainsi déterminée.

4. Procédé selon la revendication 3, **caractérisé en ce que** l'on pondère les critères présentés l'un par rapport à l'autre et on se base sur eux pour l'opération de changement de vitesse suivant des priorités prédéterminées.

5. Procédé selon la revendication 3 ou 4, **caractérisé en ce que** l'on superpose aux critères présentés des pressions de consigne ou des courbes de pression de consigne correspondantes pour une pression de consigne totale résultante.
